# EUROPEAN PATENT APPLICATION

(11) **EP 4 672 725 A1**
(43) Date of publication of application: **31.12.2025**
(21) Application number: 24185098.1
(22) Date of filing: 27.06.2024
(51) Int. Cl.: H04L 69/163, H04L 69/16, H04L 67/56, H04W 80/06, H04L 67/561

(54) **METHOD FOR GTP TCP DATA PACKET TRAFFIC**

(71) Applicant: ST Engineering iDirect, Inc. dba iDirect, Herndon, VA 20171 (US)
(72) Inventor: XU, Xiaoping, Oak Hill, 20171 (US)
(74) Representative: Winger

(57) **Abstract**

The present invention relates to a method for organizing traffic of GTP TCP data packets over a network comprising a satellite link between a hub side and one or more terminals at a remote side, whereby a TCP spoofer is provided at either side. The method comprises :
- receiving at a TCP spoofer at the hub side or the remote side a GTP TCP data packet transmitted over the network or to be transmitted over the network,
- checking if the GTP TCP data packet belongs to an existing GTP spoof session,
- if no existing GTP spoof session is found, create a new GTP spoof session and save the GTP TCP data packet's sequence number as reference sequence number for the new GTP spoof session for the side where the TCP spoofer is located if the GTP TCP data packet is to be transmitted over the network, or, if the GTP TCP data packet has been transmitted over the network, from the other side,
- if an existing GTP spoof session is found and if a stored reference sequence number linked to the existing GTP spoof session equals a predetermined value, overwrite the stored reference sequence number with the sequence number of the received GTP TCP data packet for the other side than where the TCP spoofer is located if the GTP TCP data packet was transmitted over the network or for the side where the TCP spoofer is located if the GTP TCP data packet is to be transmitted over the network.

## Description

### Field of the invention

The present invention is generally related to the field of network acceleration techniques for backhaul traffic over GPRS tunnelling protocols.

### Background of the invention

Mobile communication systems provide ever higher speed and more data intensive services to end users, like voice, data, video, images etc.... Third generation (3G) mobile communication networks (e.g., Universal Mobile Telecommunications System (UMTS)), fourth generation (4G) networks (e.g., Long Term Evolution (LTE)) as well as fifth generation (5G) networks have become well known and are commonly used to provide differentiated Quality of Service (QoS) across various applications. Whereas 3G networks generally rely on a combination of packet switching and circuit switching, 4G networks employ only packet switching. 5G networks also use a combination of circuit switching and packet switching. The LTE mobile network provides seamless Internet Protocol (IP) connectivity between a user equipment (UE) of the subscriber and the Packet Data Network (PDN). The LTE mobile network provides for higher bandwidths, better spectrum efficiency, wider coverage and full interworking with other access/backend systems and provides for significantly higher data rates. However, this has also led to potential problems related to the backhaul of data communication from remote Evolved NodeBs (eNodeB) or Next Generation NodeBs (gNodeB), i.e. from base stations for communication with mobile user equipment such as smart phones and tablets, back to the respective core network.

In addition to user plane traffic from the various user terminals served by a given eNodeB at any given moment, the eNodeB backhaul traffic comprises additional components, such as control plane signaling, and transport protocol overhead (tunneling protocol overhead, for the tunneling that enables the user terminal to maintain the same IP address across eNodeBs and gateways). Generally, 4G LTE networks employ general packet radio service (GPRS) tunneling protocol (GTP) to transport user data packets over the mobile backhaul between the base stations and core network elements. The GPRS tunneling protocol consists of a group of IP-based communications protocols used to carry GPRS within GSM, UMTS, LTE and 5G-NR networks.

GTP can be decomposed into separate protocols, GTP-C, GTP-U and GTP'. GTP-C represents the GTP protocol for control plane data packets. It is used within the GPRS core network for signaling between gateway GPRS support nodes (GGSN) and serving GPRS support nodes (SGSN). This allows the SGSN to activate a session on behalf of a user (Packet Data Protocol (PDP) context activation), to deactivate the same session, to adjust quality of service parameters, or to update a session for a subscriber who has just arrived from another SGSN. GTP-U represents the GTP protocol for user plane data packets and is used for carrying user data within the GPRS core network and between the radio access network and the core network. The user data transported can be packets in any of IPv4, IPv6, or PPP formats. GTP' *(GTP prime)* uses the same message structure as GTP-C and GTP-U but has an independent function. It can be used for carrying charging data from the charging data function (CDF) of, e.g., the GSM or UMTS network to the charging gateway function (CGF). In most cases, this means from many individual network elements such as the GGSNs to a centralized computer that delivers the charging data more conveniently to the network operator's billing center. Different GTP variants are implemented by Radio Network Controllers, SGSNs, GGSNs and CGFs within 3GPP networks. GPRS mobile stations (MSs) are connected to a SGSN without being aware of GTP. GTP can be used with UDP or TCP. UDP is either recommended or mandatory, except for tunnelling X.25 in version 0. GTP version 1 is used only on UDP.

LTE, 5G-NR and other terrestrial mobile data networks require a significant amount of backhaul bandwidth, especially during peak times. Due to the vast number of eNodeBs/gNodeBs and their geographical distribution, it is often neither feasible nor cost effective to deploy dedicated high-speed terrestrial backhaul links or high-speed microwave, to every node. As a result, satellite networks are becoming more favorable as solutions for the eNodeB/gNodeB backhaul issues in LTE/5G-NR and other terrestrial mobile communications systems. Satellite communications systems generally possess sufficient bandwidth to handle such backhaul traffic. However, a major problem with satellite-based solutions is the long over the air (OTA) round trip delay (in the order of 500 ms).

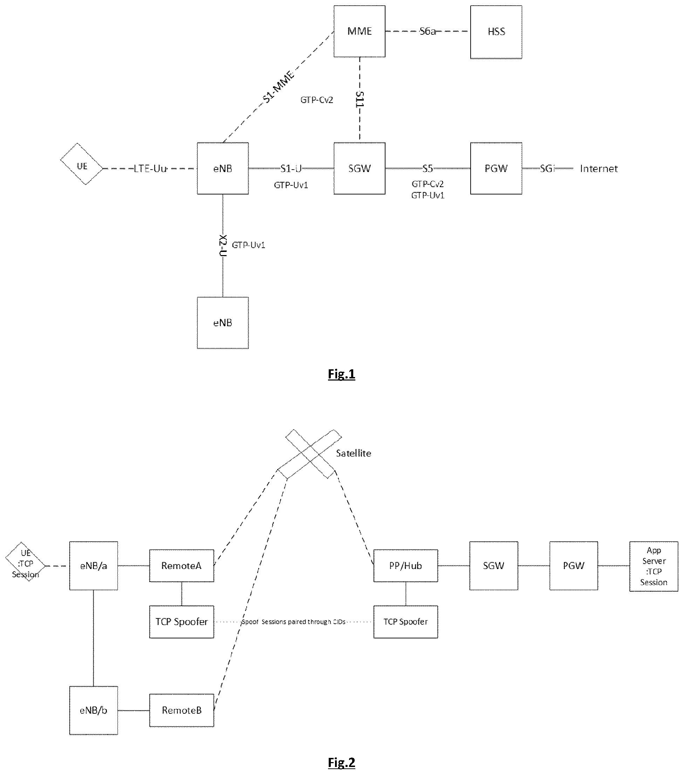

Fig.1 illustrates by way of example a high-level scheme of an LTE or 4G mobile communication system supporting a typical scenario for cellular backhaul connectivity. The LTE network comprises an access network and a core network. The access network handles the radio communication with the mobile user equipment (UE). The core network comprises a fully packet-switched all-IP core network. The core network is in connection with the evolved base stations (denoted eNBs in Fig.1) which each control mobile devices in one or more cells. Each eNodeB (eNB) connects with the core network by means of a S1-U interface. S1 is a protocol for carrying user data between different network elements in a mobile network. S1 transports GTP packets between an eNB and SGW. The S1-U interface provides non-guaranteed data delivery of user plane Protocol Data Unit (PDUs) between an eNB and the Serving Gateway (SGW). As shown in Fig.1, the eNodeB can also be connected to nearby base stations by the X2-U interface. X2 is a protocol for carrying user data between different network elements in a mobile network. X2 forwards GTP packets from one eNB to another eNB. The X2-U interface is defined between eNBs that provide user plane per bearer GTP-U tunneling. It is used for data forwarding during X2 initiated handover e.g. from one eNodeB to the other. The dashed lines in Fig.1 indicate the GTP control path.

The core network generally comprises the serving gateway (SGW), the packet data network (PDN) gateway (PGW), the mobility management entity (MME), and the home subscriber server (HSS). The core network communicates with external packet data networks (PDNs), such as the Internet, private corporate networks, an IP services network, etc. The eNodeBs interface with the core network via the serving gateway (SGW), which acts as a router and forwards data between the base station and the packet data network (PDN) gateway (PGW). All user IP packets are transferred through the SGW, which serves as the local mobility anchor for the data bearers when the UE moves between eNodeBs.

The PGW communicates with external IP networks (PDNs), serving as the termination point of the packet data interface towards the PDNs. The PGW generally serves the same functions as the GPRS support node (GGSN) and the serving GPRS support node (SGSN) within, e.g., UMTS and GSM systems. The PDN Gateway is responsible for IP address allocation for the UEs, as well as Quality of Service (QoS) enforcement (e.g., the filtering of downlink user IP packets into the different QoS-based bearers). The PGW also controls flow-based charging according to rules from the policy and charging rules function (PCRF) server. In other words, the PGW supports policy enforcement features (which apply operator-defined rules for resource allocation and usage) as well as packet filtering (like deep packet inspection for virus signature detection) and evolved charging support (like per URL charging). The MME controls high-level operations of the UEs by means of signaling messages and the HSS, which is a central database containing relevant information about the network subscribers.

The major problem of the long delay experienced when communicating via a satellite is that retransmissions come too late. In order to solve this issue, acceleration techniques have been proposed. One option is to provide GTP packets with a TCP (Transmission Control Protocol) segment. TCP is a widely used protocol in the Internet protocol suite and provides a reliable stream of data between applications running on hosts communicating over an IP network. GTP TCP acceleration overcomes the long round trip delay for GTP tunneled TCP traffic over geo-stationary or similar other satellite link without much throughput degradation. Turning back to Fig.1, the overlay user traffic (i.e., the user traffic encapsulated in GTP packets) in GTP-U (underlay GTP protocol in UDP packets) going through Segments S1-U, X2-U can be sent over satellite link. If the overlay user traffic is TCP, it is accelerated through TCP spoof sessions (see below) running at both the hub and the remote sides. This is represented in Fig.2.

A TCP connection is established between a first host that initiated a request to establish a TCP connection and acts as a sender and a second host that receives the request to establish the TCP connection and will act as receiver, using a three-way or three-step handshake. During this process, full-duplex communication is established by: i) the sender transmitting a TCP segment with a SYN (synchronize) packet during initialization of the TCP connection; ii) the receiver sending an acknowledge (ACK) message to the sender's SYN containing the receiver's SYN (i.e., a SYN+ACK message); and iii) the sender sending an ACK to the receiver's SYN.

Fig.3 (taken from US10,257,391 B2) illustrates a block diagram depicting the structure of a general packet radio service tunneling protocol (GTP) packet carrying a TCP segment. The details of the GPRS tunneling protocol are specified in the ETSI technical specification TS 129 274. The GTP packet generally comprises an IP header, UDP header and the GTP block. The GTP block comprises the GTP header and the GTP payload (the packet data). The GTP header generally comprises a first octet, a message-type field, a length field, a tunnel endpoint identifier, a sequence number, an N-PDU number and the T-PDU data (which contains the GTP payload). The N-PDU Number field is used to coordinate the data transmission for acknowledged mode of communication between the mobile station and the SGSN. The GTP payload generally comprises (in the case of a TCP segment, as considered here) an IP header, a TCP header and the TCP packet payload (the packet data).

Once a TCP connection is established, data is transferred between devices using a sliding window acknowledgement system. The TCP transmitter includes sequence numbers in the data packets it sends. The TCP receiver uses the sequence numbers to acknowledge data packets it has received. The rate at which a TCP transmitter can send data to a TCP receiver is limited by a transmit window that defines a maximum number of unacknowledged bytes the transmitter is allowed to have at a time. As the TCP transmitter receives acknowledgments, transmitted data may be reclassified from "sent and unacknowledged" to "sent and acknowledged," which permits the send window to "slide" to send more data. If a data segment is lost in transit, the TCP transmitter will not receive an acknowledgement for the segment and will retransmit it.

The TCP transmitter dynamically adjusts the window size based on network conditions, but the window has an upper bound determined by the TCP receiver's advertised available buffer space. The TCP throughput possible with a particular window size is determined by the rate at which acknowledgments are received. With any window size, longer acknowledgment time means lower throughput.

As the throughput possible across the TCP connection is affected by the characteristics of the link in which it is used, methods for improving the performance of TCP sessions over high latency links (as encountered for example in satellite networks) have been proposed. Performance Enhancing Proxies (PEPs) are techniques that change the TCP header data before and after the high latency link (e.g., satellite link) in order to mask the high latency of the high latency link from the TCP session. One PEP technique is TCP spoofing, which involves an intermediate network device (e.g., a satellite modem/router at the remote user side or a device at the satellite carrier's Network Operations Center) imitating a TCP session by sending locally generated TCP packet acknowledgments. A device provided with spoofing functionality (in this description further often called a spoofing device or, short, a spoofer) locally acknowledges receipt of a data packet from a sender as if it were the receiver. The TCP spoofer may be on the same Local Area Network (LAN) as the host requesting the TCP connection, e.g. it may be implemented in a router and/or modem that the host device (i.e. the TCP sender) connects to. The local acknowledgments reduce the round-trip time perceived by the TCP sender, allowing the TCP sender to transmit data more quickly, thereby improving throughput. In order to implement TCP spoofing, the spoofing device (the spoofer) utilizes memory resources (e.g., a storage buffer) to store data segments until they are acknowledged across the link and allow for the retransmission of data segments for which no acknowledgement is received.

In Fig.2 a TCP session is set up between an application server (indicated in the figure as AppServer) at the gateway side and a user equipment (UE) at the remote terminal side. The AppServer acts as TCP sender and the UE as TCP receiver. Via the PGW and SGW (not shown in Fig.2), GTP tunneled data packets reach a processor (indicated as PP/Hub in Fig.2) arranged to perform various IP packet protocols at the hub side. At the PP/Hub a process (indicated as SA-RMT) in Fig.2) is run which handles traffic to/from the terminals (RemoteA, RemoteB) at the remote side. First, packets of the GTP tunneled traffic flow are received from the AppServer and processed. During this step, the GTP tunnel is not terminated. Both the GTP header and its payload (which effectively consists of the IP segment, i.e. IP header and payload) are passed to the performance enhancing proxy (PEP) layer, where the PEP functions are applied to the GTP tunneled packet. After that, the GTP tunneled packet including the GTP header is sent over the satellite link and further processed within the PEP layer in the satellite terminal at the remote side.

The PEP functions include TCP acceleration. By way of example, the TCP acceleration function may include spoofing of the TCP three-way handshake, and end-to-end spoofing of the TCP acknowledgments (ACKs) to reduce the handshaking traffic carried over the satellite link. In this context, the terminal at the eNodeB would serve as the TCP proxy (performing the PEP functionality) to the client applications of the UEs (see the 'TCP spoofer' block at the remote side in Fig.2), and the satellite gateway at the core network would serve as the TCP proxy to the core network (see the block 'TCP spoofer' at the gateway side in Fig.2). By way of further example, the PEP function may include IP/UDP/TCP header and payload compression for tunneled packets, tunneled traffic classification (e.g., protocol, port number, source, destination, size), and tunneled traffic shaping, policing and prioritization based on classification, DNS query response from DNS cache on the satellite terminal (VSAT), slip buffer to minimize jitter based on classification.

The spoof TCP session running at the hub side in Fig.2 sends back an ACK packet when it receives the TCP packets from the App Server (i.e., the TCP Sender). The ACK packet is received by the App Server (TCP Sender). After that, the spoof TCP session sends the received TCP packets over the air. They are further handled by the peer spoof TCP session at RemoteA and the packets are sent to the UE, which is the TCP Receiver, through eNB/a following the TCP protocol. The TCP ACK packet from the UE arrives, through eNB/a, at the spoofer in connection with RemoteA and is handled by its spoof TCP session. This works smoothly when UE is not roaming from eNB/a to eNB/b.

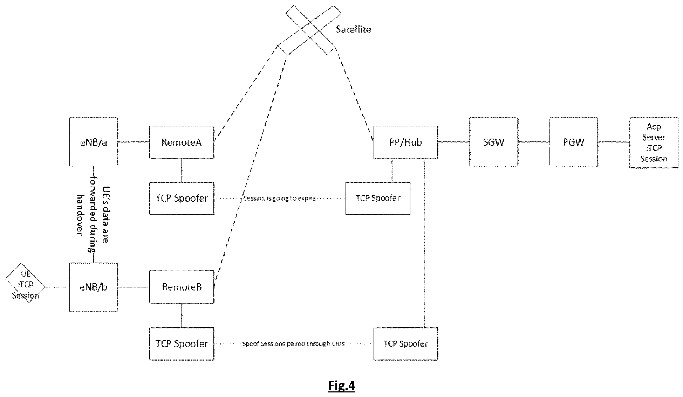

When the UE is roaming from the radio network managed by eNB/a to the radio network managed by eNB/b, while the above-mentioned TCP sessions are going on, a situation as sketched in Fig.4 occurs. The TCP packets sent from the RemoteA spoof TCP session to the UE (TCP Receiver) are forwarded to eNB/b by eNB/a, then reach the UE (TCP Receiver) in the new radio network. Upon receiving such TCP packets, the UE (TCP Receiver) sends back a TCP ACK packet which arrives at eNB/b. At this moment, since the UE roaming process from eNB/a to eNB/b is completed, this TCP ACK packet is sent in a new GTP channel from eNB/b to the spoofer in connection with RemoteB, arrives at the TCP spoof session of the spoofer for RemoteB at processor PP/Hub, and is forwarded to the App Server (the TCP Sender), thereby making use of the connecting IDs (CIDs). However, as explained, the App Server TCP has already received such TCP ACK packet from the TCP spoofer at PP/Hub for RemoteA. Hence, duplicated TCP ACK packets are received, and the App Server (the TCP Sender) closes down the TCP session.

There is still another problem that emerges when roaming from the radio network managed by eNB/a (the source node) to the radio network managed by eNB/b (the target node). The TCP ACK packet from the UE in the radio network managed by eNB/b for the TCP packet (sent from the spoofer at RemoteA, forwarded by eNB/a to eNB/b, and arrived at the UE) arrives at eNB/b, is sent in a new GTP channel from eNB/b to the RemoteB spoofer. That means, it is not sent back to the RemoteA spoofer which is the real sender of received TCP packets. Because of this missing TCP ACK packet, the TCP session in the RemoteA spoofer may not be able to send out remaining TCP packets in its TCP transmission buffer. Hence the persistent missing TCP packets are detected by the UE (the TCP Receiver) which stalls the TCP session.

As both problems result from a roaming operation from a source node (here eNB/a) to a target node (eNB/b), one may consider trying to avoid such situations by detecting the start of UE roaming and its completion by means of the spoofers at RemoteA and RemoteB. However, pursuing such a solution path not only requires GTP control signaling messages passing through the spoofers at RemoteA and RemoteB, but also requires coordination between them and the spoofers at PP/Hub side. The latter is impossible to achieve because the UE roaming process involves eNBs and SGWs, and follows the procedure shown below:
1. The UE sends a handover request message to the source eNB
2. The source eNB sends a handover request message to the target eNB
3. The target eNB sends a handover request acknowledgement message to the source eNB.
4. The source eNB sends a handover command message to the UE.
5. The UE sends a handover complete message to the source eNB.
6. The source eNB sends a forward relocation request message to the source SGW
7. The source SGW sends a forward relocation response message to the source eNB.
8. The source eNB sends a modify bearer request message to the source SGW.
9. The source SGW sends a modify bearer response message to the source eNB
10. The target SGW sends a create session request message to the MME.
11. The MME sends a create session response message to the target SGW
12. The target SGW sends a create bearer request message to the target eNB.
13. The target eNB sends a create bearer response message to the target SGW
14. The target eNB sends an end marker packet on the old path to the S-eNB and then can release any user plane / TNL resources toward the S-eNB

It usually takes nearly one second to complete this procedure. During that period of time, the TCP packets of user traffic between the UE and the App Server are still passing through the spoofing devices which cannot hold all those packets until completion of the UE roaming process before handling the packets properly, not to mention that there is no clear cut of the UE roaming process start and end when considering both spoofers at the remote and hub sides. That means such theoretically plausible solution path leads to a dead end.

While the explanation given above was made for 4G, it is clear the same observations can be made in the context of 5G networks (e.g. using gNBs instead of eNBs).

Although the above-mentioned problems are known for quite some time, no satisfactory solution has been proposed so far. Consequently, there is a need for a solution coming from the spoofing device itself based on a thorough understanding of TCP/GTP protocols and TCP packet behaviors during the UE roaming process.

### Summary of the invention

It is an object of embodiments of the present invention to provide a method for shaping the GTP TCP data packet flow over a network comprising a satellite link in such a way that the above-mentioned problems related to roaming can be avoided. It is a further object of the present invention to provide a network device configured for performing such a method.

The above objective is accomplished by the solution according to the present invention.

In a first aspect the invention relates to a method for organizing traffic of GTP TCP data packets over a network comprising a satellite link between a hub side and one or more terminals at a remote side, whereby a TCP spoofer is provided at either side. The method comprises :
- receiving at a TCP spoofer at the hub side or the remote side a GTP TCP data packet transmitted over the network or to be transmitted over the network, said GTP TCP data packet comprising at least a header comprising a sequence number for each GTP TCP data packet,
- checking in the header of said GTP TCP data packet if said GTP TCP data packet belongs to an existing GTP spoof session, and
- if no existing GTP spoof session is found, create a new GTP spoof session and save the GTP TCP data packet's sequence number as reference sequence number for the new GTP spoof session for the side where the TCP spoofer is located if said GTP TCP data packet is to be transmitted over the network (i.e. the side from where the GTP TCP data packet is sent over the network), or, if said GTP TCP data packet has been transmitted over the network, for the other side,
- if an existing GTP spoof session is found and if a stored reference sequence number linked to the existing GTP spoof session equals a predetermined value, overwrite the stored reference sequence number with the sequence number of the received GTP TCP data packet for the other side than where the TCP spoofer is located if said GTP TCP data packet was transmitted over the network or for the side where the TCP spoofer is located if said GTP TCP data packet is to be transmitted over the network.

The proposed solution indeed allows for an organization of the traffic of GTP TCP data packets in a way that, even when a user equipment roams from a radio network managed by an access point, e.g., eNB/a (or gNB/a) to a network managed by another access point, e.g., eNB/b (or gNB/b), it is possible to identify the first GTP TCP data packet being transmitted in a given direction. This also implies TCP ACK (acknowledgement) data packets by means of their ACK number can be identified as coming from the present network set-up or from a previous network set-up (and can be discarded safely), as will be explained in detail later in this description. Hence, the problem with the duplicated TCP ACK packets as sketched in the background section now cannot occur anymore. The proposed method can equally be applied when roaming occurs at the hub side, typically by serving gateways (SGWs). The key element in the proposed solution is to save the sequence number of the first GTP TCP data packet as reference sequence number.

In a preferred embodiment the method comprises a step of sending the GTP TCP data packet over the network.

In one embodiment the method comprises adding to the GTP TCP data packet metadata related to GTP envelope data of the GTP TCP data packet.

In an advantageous embodiment the header comprises information on an address and port of a TCP source and TCP destination. From this information the TCP spoofing device can determine whether or not there is a GTP TCP spoof session ongoing.

In some embodiments the method comprises receiving a TCP acknowledgement, ACK, packet at the TCP spoofer at the hub side or the remote side in response to transmitting the GTP TCP data packet over the network. In such cases there is further provided a step of comparing an ACK number of said TCP ACK packet with said reference sequence number.

In embodiments the TCP ACK data packet is dropped instead of being transmitted over said network if said ACK number is smaller than the reference sequence number. In other embodiments the TCP ACK data packet is dropped if no existing GTP spoof session is found, and the TCP ACK data packet has been transmitted over the network.

In one aspect the invention relates to a program, executable on a programmable device containing instructions which, when executed, perform the method as previously described.

In another aspect the invention relates to a network device for establishing communication of GTP TCP data packets over a network comprising a satellite link between a hub side and one or more terminals at a remote side. The device comprises
- means configured for receiving and storing a GTP TCP data packet transmitted over the network or to be transmitted over the network, said GTP TCP data packet comprising at least a header comprising a sequence number for that GTP TCP data packet,
- processing means arranged for checking in the header of the GTP TCP data packet if the GTP TCP data packet belongs to an existing GTP spoof session, and for,

if no existing GTP spoof session is found, creating a new GTP spoof session and saving the GTP TCP data packet's sequence number as reference sequence number for the new GTP spoof session for the side where the device is located if the GTP TCP data packet is to be transmitted over the network, or, if the GTP TCP data packet has been transmitted over the network, for the other side, or,
if an existing GTP spoof session is found and if a stored reference sequence number linked to the existing GTP spoof session equals a predetermined value, overwriting the stored reference sequence number with the sequence number of the received GTP TCP data packet for the other side than where the device is located if the GTP TCP data packet was transmitted over the network or for the side where the TCP spoofer is located if the GTP TCP data packet is to be transmitted over the network.

The device is typically positioned either at the hub side or at the remote side. Advantageously, the device is arranged to be connected to a satellite terminal.

In one embodiment the device is further adapted to act as a router.

In a preferred embodiment the network device further comprises a retransmission timer.

In another aspect the invention relates to a method for sending GTP TCP data packets over a satellite link between a hub side and a remote side, at least one of said hub side and said remote side being provided with
- at least one mobile terminal,
- a first terminal, a first access point for establishing connection between said first terminal and said at least one mobile terminal and a first TCP spoofer in connection with said first terminal, said first TCP spoofer comprising a buffer for storing received GTP TCP data packets and a retransmission timer arranged to set a maximum duration before transmitting stored GTP TCP data packets,
- a second terminal, a second access point for establishing connection between said second terminal and said at least one mobile terminal and a second TCP spoofer in connection with said second terminal, said second TCP spoofer comprising a buffer for storing received GTP TCP data packets and a retransmission timer arranged to set a maximum duration before transmitting stored GTP TCP data packets,
whereby said at least one mobile terminal can roam between a radio network managed by said first access point and a radio network managed by said second access point. The method comprises :
- defining at said first and said second TCP spoofer a variable accounting for the number of GTP TCP data packets received in an ongoing GTP spoof session from the side where said first and said second TCP spoofer are located, said variable having an initial value,
- when a GTP TCP data packet is received from said side where said first and said second TCP spoofer are located, incrementing said variable,
- when said retransmission timer of said first or said second retransmission timer expires and said variable accounting for the number of received GTP TCP data packets equals said initial value, sending from said buffer GTP TCP data packets received from the other side than said side where said first and said second TCP spoofer are located, to said mobile terminal,
- when said retransmission timer of said first or said second retransmission timer expires and said variable accounting for the number of received GTP TCP data packets is different from said initial value, reset said variable to the initial value.

Due to the introduction of the variable accounting for the number of GTP TCP data packets received from the local side (i.e. the side where the first and second terminal are located) it is possible to observe whether or not the connection between TCP spoofer and the client, i.e. the user equipment, is still up. If the variable indicates that no TCP data packets from the local side are received when the retransmission timer expires, it may be assumed that the user equipment has roamed or is down for some reason.

The mobile terminal may either be a user equipment at the remote side roaming from one radio network to another or may be a service gateway (SGW). In the former case the roaming occurs at the remote side, in the latter case at the hub side.

In yet a further aspect the invention is related to a network device for establishing communication of GTP TCP data packets over a network comprising a satellite link between a hub side and one or more terminals at a remote side. The device comprises
- means configured for receiving and storing a GTP TCP data packet transmitted over the network or to be transmitted over the network,
- a retransmission timer arranged to set a maximum duration before transmitting stored GTP TCP data packets.
The device is characterized in that it comprises a variable accounting for the number of GTP TCP data packets received in an ongoing GTP spoof session from the side where the first and the second TCP spoofer are located, said variable having an initial value. When in use, the variable is incremented whenever a GTP TCP data packet is received from the side where the first and second TCP spoofer are located.

The invention further relates to a communication system configured for sending GTP TCP data packets over a satellite link between a hub side and a remote side, wherein at least one of said hub side and said remote side is provided with at least one mobile terminal. The communication system further comprises a first terminal, a first access point and a first spoofer in connection with said first terminal, said first TCP spoofer comprising a buffer and a retransmit timer, and a second terminal, a second access point and a second spoofer in connection with said second terminal, said second TCP spoofer also comprising a buffer and a retransmit timer. The first and the second spoofer comprise a variable accounting for the number of GTP TCP data packets received in an ongoing GTP spoof session from the side where the first and said second TCP spoofer are located. The variable has an initial value and is incremented when a GTP TCP data packet is received from the local side.

For purposes of summarizing the invention and the advantages achieved over the prior art, certain objects and advantages of the invention have been described herein above. Of course, it is to be understood that not necessarily all such objects or advantages may be achieved in accordance with any particular embodiment of the invention. Thus, for example, those skilled in the art will recognize that the invention may be embodied or carried out in a manner that achieves or optimizes one advantage or group of advantages as taught herein without necessarily achieving other objects or advantages as may be taught or suggested herein.

The above and other aspects of the invention will be apparent from and elucidated with reference to the embodiment(s) described hereinafter.

### Brief description of the drawings

The invention will now be described further, by way of example, with reference to the accompanying drawings, wherein like reference numerals refer to like elements in the various figures.
Fig.1 illustrates a high-level scheme of a mobile communication system supporting a scenario for cellular backhaul connectivity.
Fig.2 illustrates a high-level scheme arranged for accelerating data traffic through TCP spoof sessions.

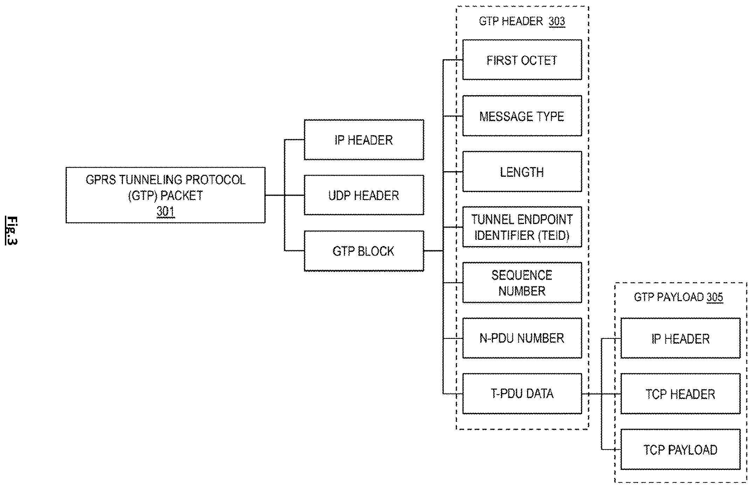

Fig.3 illustrates the general structure of a GTP TCP data packet.
Fig.4 illustrates a situation wherein the App server receives duplicated TCP ACK packets.
Fig.5 illustrates a flow chart for a scenario for a TCP spoofer at the hub side and a data packet to be transmitted over the network.
Fig.6 illustrates a flow chart for a scenario for a TCP spoofer at the hub side and a data packet that was transmitted over the network from the remote side.
Fig.7 illustrates a flow chart for a scenario for a TCP spoofer at the remote side and a data packet that was transmitted over the network from the hub side.
Fig.8 illustrates a flow chart for a scenario for a TCP spoofer at the remote side and a data packet and a data packet to be transmitted over the network.

### Detailed description of illustrative embodiments

The present invention will be described with respect to particular embodiments and with reference to certain drawings but the invention is not limited thereto but only by the claims.

Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

It should be noted that the use of particular terminology when describing certain features or aspects of the invention should not be taken to imply that the terminology is being redefined herein to be restricted to include any specific characteristics of the features or aspects of the invention with which that terminology is associated.

In the description provided herein, numerous specific details are set forth. However, it is understood that embodiments of the invention may be practiced without these specific details. In other instances, well-known methods, structures and techniques have not been shown in detail in order not to obscure an understanding of this description.

In one aspect the present invention offers a solution for the problem that duplicated TCP ACK packets are received at the App server because the TCP spoofer at the hub side receives TCP ACK packets from two different TCP spoofers at the remote side in two different TCP spoof sessions when the user equipment (UE) is roaming from a radio network managed by a certain access point (e.g. eNB/a or gNB/a) to a radio network managed by another access point (e.g., eNB/b or gNB/b). The problem can however be considered in a broader context, wherein it is not necessarily the TCP spoofer at the hub side that receives TCP ACK packets from different spoofers. Note that a 5G-NR mobile network may be considered as well as a 4G LTE network or a 3G network. In the rest of the description a 4G LTE network is considered by way of example. Hence, reference will be made to eNB/a and eNB/b as access points. This obviously is merely an example and does not limit the invention.

In the embodiments of the invention the traffic of GTP TCP data packets over a satellite link between the hub side and the remote side is organized in the following way.

In case a GTP TCP data packet is received at the TCP spoofer at the hub side, this data packet either may be a packet intended for the remote side that is to be transmitted over the network, or it may be a data packet coming from the remote side that has been transmitted over the network.

If, on the other hand, the GTP TCP data packet is received at a TCP spoofer at the remote side (i.e., a TCP spoofer in connection with either eNB/a or eNB/b), similarly the following two situations may occur: either the data packet is a packet originating from the hub side and transmitted over network to the remote side with the user equipment (UE) as final destination, or the data packet comes from a UE and is intended to be transmitted to the hub side with the AppServer as final destination.

Hence, depending on the location of the TCP spoofer that receives the data packet (i.e. at the hub side or the remote side) and the direction the data packets travel in, four cases can so be distinguished.

Next it is checked if the received GTP TCP data packet belongs to an existing GTP spoof session. This can be derived from information contained in the header of the data packet. More in particular, the header comprises at least information on the TCP source address and port and the TCP destination address and port. As commonly known from the TCP standard, these pieces of information suffice to uniquely identify a TCP session.

The check yields one of two possible outcomes : either an existing GTP spoof session is found or no existing GTP spoof session is found.

In case there is no existing GTP spoof session, a new GTP spoof session is created and the GTP TCP data packet's sequence number (SEQ number) is saved as reference sequence number for the new GTP spoof session for the side where the TCP spoofer is located if the GTP TCP data packet is to be transmitted over the network comprising the satellite link, hence, for the side of the TCP sender, or, if the GTP TCP data packet already has been transmitted over the network and the considered TCP spoofer is at the TCP receiver side, from the other side, i.e. the side of the TCP sender.

For the four cases considered above, with the TCP spoofer receiving the GTP TCP data packet either at the hub side or the remote side and the GTP TCP data packet either ready to be transmitted over the network or received after transmission over the network, this can be construed as follows.

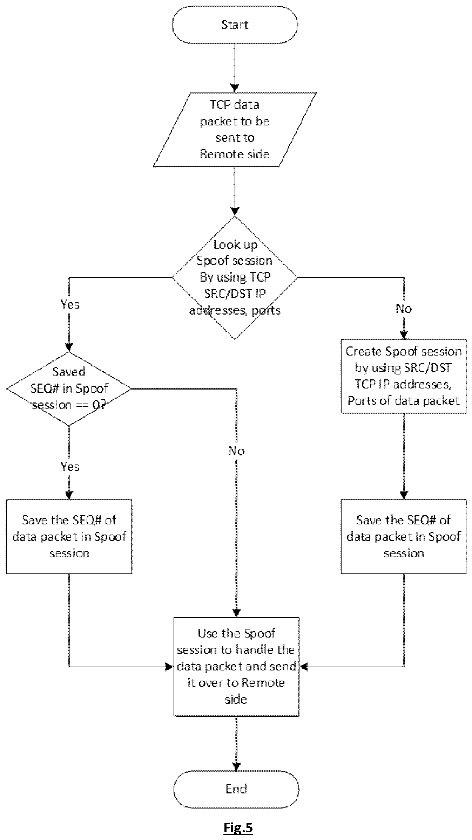

If the GTP TCP packet is received at the TCP spoofer at the hub side and is intended to be transmitted over the network, that TCP spoofer is at the TCP sender side and the GTP TCP data packet is the first data packet in the GTP spoof session to be sent over the network to the remote side (which is thus the side of the TCP receiver). A new session is created and the SEQ number of the data packet is saved as reference for the GTP spoof session running at the TCP spoofer at hub side. These actions are illustrated in the branch at the right hand side in the flow chart of Fig.5.

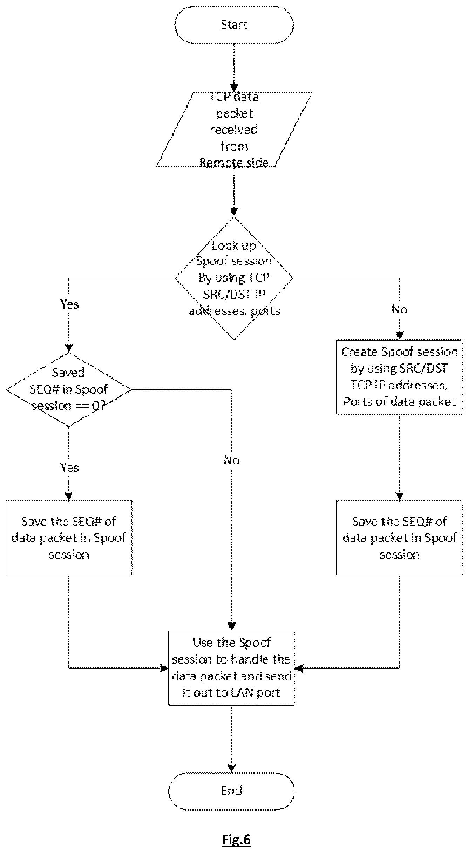

If the GTP TCP packet is received at the TCP spoofer at the hub side and was transmitted over the network from the remote side (either from the radio network managed by eNB/a or from the radio network managed by eNB/b), the received GTP TCP data packet was sent as the first data packet of a new GTP spoof session to be created at the hub side. The TCP spoofer at the hub side then acts as the peer TCP spoofer. The SEQ number of the data packet is saved in the TCP spoofer at the hub side as reference for the new spoof session wherein data packets are transmitted from the remote side. These actions are illustrated in the branch at the right hand side in the flow chart of Fig.6.

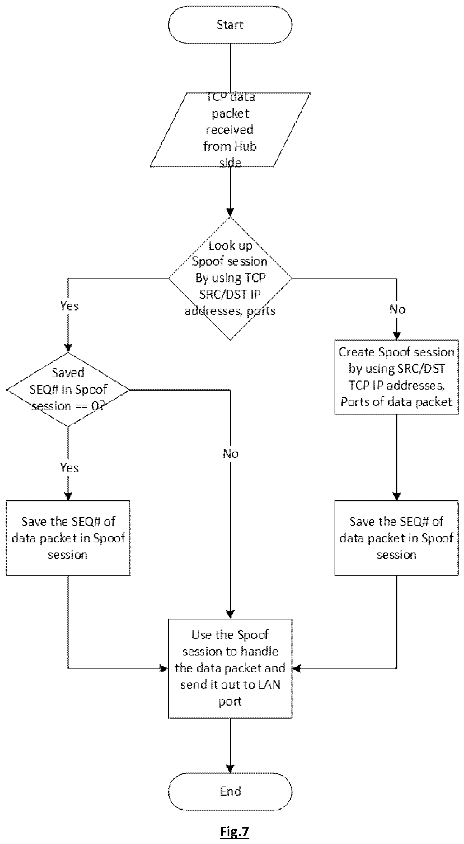

If the GTP TCP packet is received at the TCP spoofer at the remote side (either the spoofer connected to eNB/a or to eNB/b) after having been transmitted from the hub side over the network, the TCP spoofer at the remote side acts as peer TCP spoofer. If there is no existing GTP spoof session, the received data packet then is the first data packet in a new session that is created at the remote side and the SEQ number of the data packet is saved as reference for the new spoof session wherein data packets are transmitted from the hub side. These actions are illustrated in the branch at the right hand side in the flow chart of Fig.7.

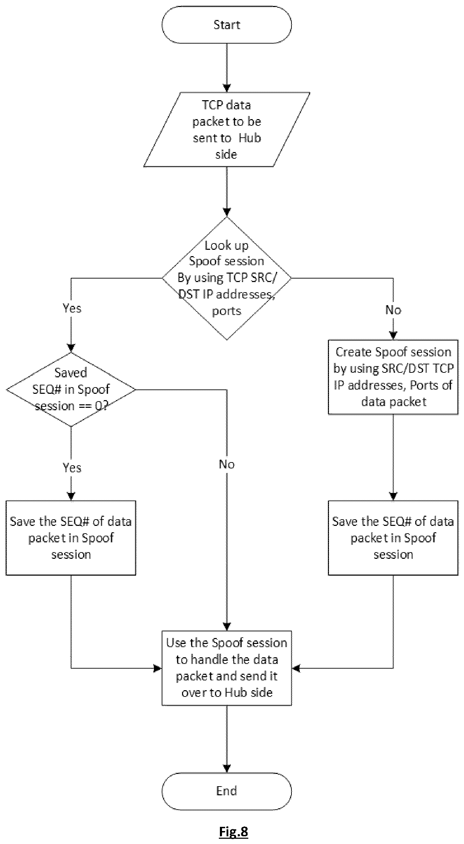

If the GTP TCP packet is received at the TCP spoofer at the remote side (either the spoofer connected to eNB/a or to eNB/b) and is to be transmitted to the other side, i.e. to the hub side, the data packet is the first to be sent over the network to the hub side in a new spoof session to be created and its SEQ number is saved as reference for the new spoof session in the TCP spoofer at remote side. These actions are illustrated in the branch at the right hand side in the flow chart of Fig.8.

In case an existing GTP spoof session is found, the following procedure is applied. If a stored reference sequence number linked to the existing GTP spoof session equals a predetermined value, for example zero or another dedicated predefined number, which indicates the received GTP TCP data packet is the first in a new GTP spoof session, then that stored reference sequence number is overwritten with the sequence number of the received GTP TCP data packet for the other side than the side where the TCP spoofer receiving the considered GTP TCP data packet is located if the data packet was transmitted over the network (in other words, for the side of the TCP sender) or for the side where the TCP spoofer is located (i.e. for the side of the TCP sender) in case the GTP TCP data packet is to be transmitted over the network. Hence, the saved sequence number is an indication for the first GTP TCP data packet transmitted from the TCP sender side.

In the four possible schemes this can be concretized as follows.

If the TCP spoofer is at the hub side and the GTP TCP data packet received at the TCP spoofer is intended to be transmitted to the remote side, it is first checked if the stored reference value equals the dedicated predetermined value (e.g. zero). If so, there is already a spoof session, but the data packet is still the first in the session to be sent over the network to the remote side. The stored reference value is overwritten with the sequence number of the GTP TCP data packet (as it is the first packet of the spoof session) for the TCP spoofer at the hub side, from where the data packet is to be transmitted. These actions are illustrated in the branch at the left-hand side in the flow chart of Fig.S.

If the TCP spoofer is at the hub side and the GTP TCP data packet received at the TCP spoofer was already transmitted from the remote side over the network to the hub, and there is already a spoof session, then the TCP spoofer at the hub side can be seen as the peer TCP spoofer. If the stored reference sequence number is the predetermined value (e.g. zero) then the GTP TCP data packet is the first in the spoof session and the sequence number of the data packet is saved instead of the previously stored reference sequence number for the other side than where the TCP spoofer that receives the TCP data packet is located (hence, for the remote side which is the side of the TCP sender). If the stored reference sequence number is not the predetermined value, then it is not the first data packet and the stored reference value remains equal to the sequence number of the first received data packet in the spoof session. These actions are illustrated in the branch at the left-hand side in the flow chart of Fig.6.

If the TCP spoofer is at the remote side and the GTP TCP data packet received at that TCP spoofer was already transmitted from the hub side over the network to the remote side, the TCP spoofer at the remote side is the peer TCP spoofer. If there is already a spoof session and the stored reference value is the predetermined value (e.g. zero), then the GTP TCP data packet is the first in the session the sequence number of the data packet is saved instead of the previously stored reference value for data packet traffic coming from the other side than where the TCP spoofer is located, hence for the hub side, which is the side of the TCP sender. These actions are illustrated in the branch at the left-hand side in the flow chart of Fig.7.

If the TCP spoofer is at the remote side and the GTP TCP data packet received at the TCP spoofer is intended to be transmitted to the hub side and there is already a spoof session, it is first checked if the stored value equals the dedicated predetermined value (e.g. zero). If so, the data packet is still the first in the session to be sent over the network to the hub side. The stored reference value is then overwritten with the sequence number of the data packet (as it is the first packet) for the TCP spoofer at the remote side (from where the data packet is to be transmitted). If the stored value does not equal the predetermined value, then it is not the first data packet in the spoof session and the stored reference value remains equal to the sequence number of the first packet transmitted in the spoof session. These actions are illustrated in the branch at the left-hand side in the flow chart of Fig.8.

Organizing the traffic of GTP TCP data packets as explained above, also allows dealing with TCP ACK packets by exploiting the stored reference values.

If a TCP Spoofer at the remote side receives a TCP ACK packet from the UE, the spoofer uses information from the TCP ACK packet header to look up a GTP Spoof session. If no existing GTP TCP Spoof session is found (as is the case for example for the TCP spoofer connected to access point eNB/b when the UE has roamed from the radio network managed by eNB/a to the radio network managed by eNB/b), the spoofer creates a new GTP Spoof session, and sends the TCP ACK packet over the air to the hub side without saving GTP envelope information. The GTP envelope information comprises GTP source (SRC) and destination (DST) IP Addresses, SRC and DST Ports, TEID, SEQ number of the TCP ACK packet in meta data. If an existing GTP TCP Spoof session is found (as is the case for the TCP spoofer connected to access point eNB/a when no roaming has occurred or for the TCP spoofer connected to access point eNB/b when the UE has roamed from the radio network managed by eNB/a to the radio network managed by eNB/b already some time ago and a TCP spoof session for the TCP spoofer connected to eNB/b has already been established), the saved SEQ number related to that TCP spoof session is checked. That SEQ number refers to the first GTP TCP data packet that was sent from the hub side. If the ACK number of the TCP ACK packet is smaller than the stored SEQ number, it can be concluded the TCP ACK packet concerns an acknowledgement of an older packet sent in another, earlier spoof session and can consequently safely be dropped without saving GTP envelope info of the packet in meta data. On the contrary, if the ACK number of the TCP ACK packet is greater than the SEQ number, the TCP ACK packet is expected.

Upon receiving the GTP TCP ACK packet over the air, the peer TCP spoofer at the hub side uses GTP TCP ACK packet header information to look up a GTP Spoof session. If no existing GTP TCP spoof session is found (this happens for example if the received ACK packet comes from the spoofer at remote B after that the UE has roamed, while the GTP TCP data packet was received at the remote side by the spoofer at remote A), the peer TCP spoofer creates a new GTP spoof session, and drops the TCP ACK packet (because it is the acknowledgement of a packet of an earlier spoof session) without saving GTP envelope information of the packet. If an existing GTP Spoof session is found (for example, because the ACK packet has already arrived from the spoofer of remote A before roaming) and its saved SEQ number from the local side (i.e., the hub side) from where the TCP data packets are sent is non-zero, then the ACK number of GTP TCP ACK packet is compared with the saved SEQ number from the local side (the hub side). If the ACK number is smaller than the SEQ number, then the GTP TCP ACK packet is dropped without saving GTP envelope information of the packet in meta data because it is an 'old' packet. Note that when comparing the ACK number one has to keep in mind that a so-called wrap around may have occurred when the numbering has reached a maximum value and a restart from zero is needed. Otherwise, the normal logic through GTP TCP spoof session is followed to handle the ACK packet accordingly, whereby the spoof session releases the TCP packets received from the retransmission buffer and forwards the ACK packet in a proprietary way to the peer spoof session.

In the above discussion ofTCP ACK packets it was assumed the TCP sender is located at the hub side and the TCP receiver at the remote side. Obviously, the opposite situation can be considered as well, i.e. the TCP sender being located at the remote side and the TCP receiver at the hub side. The above discussion can then basically be repeated with only a few changes, as the skilled person will immediately recognize. More specifically, for a GTP TCP data packet received at the hub side from the remote side (hence, whereby the TCP sender is at the remote side and the TCP receiver at the hub side), the TCP spoofer at the hub side may send a TCP ACK packet over the air to a TCP spoofer at the remote side, i.e., depending on the position of the user equipment, either the TCP spoofer in connection with eNB/a or the spoofer in connection with eNB/b. As above, based on the stored reference value it can be decided whether a TCP ACK packet can be dropped (in case it corresponds to a GTP TCP data packet of an earlier spoof session) or that it is an acknowledgement of a data packet of the current spoof session.

Further, scenarios can be envisaged wherein the Service Gateway (SGW) is roaming. In that case similar scenarios as described above can occur, but wherein the TCP sender is located at the remote side and the TCP receiver at the hub side.

A solution is now presented to the problem of the missing GTP TCP ACK packets at the TCP spoofer that had sent the GTP TCP packet to the UE. As was explained in the background section, also this problem is caused by the roaming of the UE.

A situation is considered wherein at the remote side and/or the hub side there are one or more mobile terminals. There is a first terminal connected with the mobile terminal via an access point (e.g., eNB/a as in Fig.4 or gNB/a). A TCP spoofer is in connection with the terminal. Further, a second terminal that the mobile terminal can connect to via another access point (e.g., eNB/b or gNB/b).

In order to implement TCP spoofing, the TCP spoofing device is provided with memory resources like e.g. a retransmit (ReTx) buffer, to store received data segments until they are acknowledged across the link and to allow for the retransmission of data segments for which no acknowledgement is received. In the TCP communication standard (see for example RFC 9293) several timers are used to define expiration intervals so that the occurrence of excessive delays during communications is avoided. To retransmit lost data segments, TCP employs a retransmit timer (ReTx timer) to indicate a retransmission timeout. When TCP sends a segment the timer starts and stops when the acknowledgment is received.

When GTP TCP packets sent from the hub side arrive at the spoofer of RemoteA (see for example also Fig.4), they are put in the ReTx buffer but are not sent out immediately because the UE, the client, is not ready to receive them during UE roaming handover. Hence, there is no ACK packet coming from the UE to the RemoteA spoofer as is usually the case after reception of the GTP TCP packet. To avoid the occurrence of such problem, the following solution is proposed. In the spoofers a new variable is introduced that keeps track of the number of TCP packets that are received from the local side, i.e. from the side where the spoofers are located. In other words, one counts in the spoofer the number of received TCP packets that have not travelled over the satellite link. Such packets are ACK packets sent from the UE to the spoofer for further transmission. In the further explanation below this new variable is referred to as *'m_local_received_packets'.* The variable is given an initial value, typically zero, but obviously also another value can be taken, as the value is used only for comparison purposes.

Each time a TCP packet is received from the local side (the side where the considered spoofers are located), the variable *'m_local_received_packets'* is incremented. If the variable *m_local_received_packets* still equals its initial value when the ReTx Timer expires, all TCP packets in the ReTx buffer are sent (if any TCP packet has arrived over the satellite link), without checking if the client (i.e., the UE) is ready to receive or not. Meanwhile it is also necessary to adjust the Tx or Rx window of the connected terminal as if the spoofer does receive the TCP ACK for the last TCP packet sent out. During the spoof session the Tx window may be adapted to make sure the session at the peer spoofer device is not overwhelmed with data packets. The Rx window on the other hand is used among other things to indicate how much storage capacity is left for receiving additional data packets._The packets in the ReTx buffer are forced to be sent out without expectation that the UE would send back ACK packets. For the TCP protocol to work properly, the ACKs are required to be sent back to the peer spoofer at the Hub/PP side, so that it can continue sending the remaining packets in its Tx buffer. Otherwise, in case the variable *m_local_received_packets* has increased compared to its initial value (e.g., the value *m_local_received_packets* > 0), the variable *m_local_received_packets* is set to its initial value again (e.g., to 0) and the received ACK packets in the GTP TCP spoof session are handled in the normal way, whereby the TCP packets which have been received from retransmission buffer, are released and forwarded in a proprietary way to the peer spoof session.

Hence, when the ReTx timer reaches its expiration value and no TCP ACK packet has been received from the UE in response to TCP packets transmitted by the TCP spoofer to the local side (i.e., to the UE), then it can safely be assumed either connection to the client (i.e., the UE) is down, or UE roaming happened. If there are TCP packets stored in the ReTx buffer that in the meantime have arrived over the satellite link from the other side, they can be transmitted regardless of whether the UE is ready or not. The ReTx buffer is so emptied. Further, the window size of the transmit and receive buffer in the terminal need an adjustment to account for the TCP packets that have been dropped.

In some embodiments the mobile terminal is a user equipment at the remote side roaming from one radio network to another. In other embodiments the mobile terminal may be a service gateway (SGW) at the hub side. In the former case the roaming occurs at the remote side, in the latter case at the hub side.

While the invention has been illustrated and described in detail in the drawings and foregoing description, such illustration and description are to be considered illustrative or exemplary and not restrictive. The foregoing description details certain embodiments of the invention. It will be appreciated, however, that no matter how detailed the foregoing appears in text, the invention may be practiced in many ways. The invention is not limited to the disclosed embodiments.

Other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. Method for organizing traffic of GTP TCP data packets over a network comprising a satellite link between a hub side and one or more terminals at a remote side, whereby a TCP spoofer is provided at either side, the method comprising :
- receiving at a TCP spoofer at the hub side or the remote side a GTP TCP data packet transmitted over said network or to be transmitted over said network, said GTP TCP data packet comprising at least a header comprising a sequence number for each GTP TCP data packet,
- checking in said header of said GTP TCP data packet if said GTP TCP data packet belongs to an existing GTP spoof session,
- if no existing GTP spoof session is found, create a new GTP spoof session and save said GTP TCP data packet's sequence number as reference sequence number for said new GTP spoof session for the side where said TCP spoofer is located if said GTP TCP data packet is to be transmitted over said network, or, if said GTP TCP data packet has been transmitted over said network, for the other side,
- if an existing GTP spoof session is found and if a stored reference sequence number linked to said existing GTP spoof session equals a predetermined value, overwrite the stored reference sequence number with the sequence number of the received GTP TCP data packet for the other side than where said TCP spoofer is located if said GTP TCP data packet was transmitted over said network or for the side where the TCP spoofer is located if said GTP TCP data packet is to be transmitted over said network.

2. Method for organizing traffic as in claim 1, comprising a step of sending said GTP TCP data packet over said network.

3. Method for organizing traffic as in claim 2, comprising adding to said GTP TCP data packet metadata related to GTP envelope data of the GTP TCP data packet.

4. Method for organizing traffic as in any of the previous claims, wherein said header comprises information on an address and port of a TCP source and TCP destination.

5. Method for organizing traffic as in any of claims 2 to 5, comprising receiving a TCP acknowledgement, ACK, packet at said TCP spoofer at the hub side or the remote side in response to transmitting said GTP TCP data packet over said network.

6. Method for organizing traffic as in claim 5, comprising comparing an ACK number of said TCP ACK packet with said reference sequence number.

7. Method for organizing traffic as in claim 6, wherein said TCP ACK data packet is dropped instead of being transmitted over said network if said ACK number is smaller than said reference sequence number.

8. Method for organizing traffic as in claim 6, wherein said TCP ACK data packet is dropped if no existing GTP spoof session is found and said TCP ACK data packet has been transmitted over said network.

9. A program, executable on a programmable device containing instructions which, when executed, perform the method as in any of claims 1 to 8.

10. Network device for establishing communication of GTP TCP data packets over a network comprising a satellite link between a hub side and one or more terminals at a remote side, the device comprising
- receiver means arranged for receiving (and storing??) a GTP TCP data packet transmitted over the network or to be transmitted over the network, said GTP TCP data packet comprising at least a header comprising a sequence number for each GTP TCP data packet,
- processing means arranged for checking in said header of said GTP TCP data packet if said GTP TCP data packet belongs to an existing GTP spoof session, and
if no existing GTP spoof session is found, creating a new GTP spoof session and saving said GTP TCP data packet's sequence number as reference sequence number for said new GTP spoof session for the side where said device is located if said GTP TCP data packet is to be transmitted over said network, or, if said GTP TCP data packet has been transmitted over said network, from the other side, or,
if an existing GTP spoof session is found and if a stored reference sequence number linked to said existing GTP spoof session equals a predetermined value, overwriting the stored reference sequence number with the sequence number of the received GTP TCP data packet for the other side than where said device is located if said GTP TCP data packet was transmitted over said network or for the side where the TCP spoofer is located if said GTP TCP data packet is to be transmitted over said network.

11. Device as in claim 10, further arranged to be connected to a remote terminal or a satellite terminal.

12. Device as in claim 10, further adapted to act as a router.
